# EUROPEAN PATENT APPLICATION

(11) **EP 3 029 617 A1**
(43) Date of publication of application: **08.06.2016**
(21) Application number: 14198288.4
(22) Date of filing: 16.12.2014
(51) Int. Cl.: G06Q 10/06

(54) **Production performance management device and production performance management method thereof**

(30) Priority: 01.12.2014 TW 103141577; 15.12.2014 EP 14197911
(71) Applicant: Institute for Information Industry, Taipei (TW)
(72) Inventor: Lin, Grace, Hualien City (TW); Sheng, Ming-Cheng, Kaohsiung City (TW); Yu, Cheng-Juei, Taipei City (TW); Wu, Yi-Hsin, Taipei City (TW); Lin, Chih-Ming, New Taipei City (TW); Ye, Jiun-Hau, New Taipei City (TW); Wu, Wei-Wen, New Taipei City (TW); Lu, Kuan-Yu, Taichung City (TW); Weng, Ming-Lung, Changhua City (TW); Ting, Shih-Hsiang, Tainan City (TW); Gung, Roger R., Taipei City (TW)
(74) Representative: Heinze, Ekkehard

(57) **Abstract**

A production performance management device and a production performance management method thereof are provided. The production performance management device includes a connection interface, a storage and a processor. The connection interface receives production data. The storage stores the production data and a production performance management program. The processor runs the production performance management program. The production performance management program defines a main objective, a plurality of measurement indices, a plurality of factors, a custom mapping function between the main objective and the measurement indices and a plurality of specific mapping functions between the measurement indices and the factors, and uses the custom mapping function and the specific mapping functions to decide a factor value of each of the factors from the production data to make a main objective value of the main objective meet a main constraint.

## Description

### BACKGROUND OF THE INVENTION

### Field of the Invention

The present invention relates to a production performance management device and a production performance management method thereof. More particularly, the production performance management device of the present invention runs a production performance management program to decide related parameters of a manufacturing procedure based on production data so as to meet one or more production objectives.

### Descriptions of the Related Art

Owing to advancement of the science and technologies, nowadays various manufacturers are gradually adopting the computer integrated manufacturing (CIM) control system to set production schedules, control manufacturing equipments and manage orders. However, the manufacturers set related parameters (e.g., the products manufactured, the equipment type, the material type and etc.) of a manufacturing procedure usually according to their experiences of operating the CIM control system in the past.

In this case, the related parameters set for the manufacturing procedure by the manufacturers may not be the optimal parameters or not suitable for each order. This makes it impossible to optimize the manufacturing procedure to meet such requirements as the overall equipment performance, the scheduling stability and the reserved production capacity for urgent orders. Additionally, as the manufacturing procedure varies with different orders, the manufacturers might have to try the related parameter settings several times before the parameters to be adopted can be decided, and there is still no mechanism that can assist in determining whether the parameters can optimize the manufacturing procedure. Accordingly, an urgent need exists in the art to provide a production performance management mechanism to decide related parameters of a manufacturing procedure from the production data so as to meet one or more production objectives.

### SUMMARY OF THE INVENTION

An objective of the present invention is to provide a production performance management mechanism, which defines a main objective, a plurality of measurement indices, a plurality of factors, a custom mapping function between the main objective and the measurement indices and a plurality of specific mapping functions between the measurement indices and the factors and decides a factor value of each of the factors from the production data so as to make a main objective value of the main objective meet a main constraint. In other words, the production performance management mechanism of the present invention provides a prediction platform that allows the user to set one or more production objectives (i.e., guantitative goals for the production) to be achieved in the manufacturing procedure and decide related parameters of the manufacturing procedure from the production data to meet the one or more production objectives.

To achieve the aforesaid objective, the present invention discloses a production performance management device, which comprises a connection interface, a storage and a processor. The connection interface is configured to receive production data. The storage is configured to store the production data and a production performance management program. The processor, which is electrically connected to the connection interface and the storage, is configured to run the production performance management program. The production performance management program defines a main objective, a plurality of measurement indices, a plurality of factors, a custom mapping function between the main objective and the measurement indices and a plurality of specific mapping functions between the measurement indices and the factors, and uses the custom mapping function and the specific mapping functions to decide a factor value of each of the factors from the production data so as to make a main objective value of the main objective meet a main constraint.

Additionally, the present invention further discloses a production performance management method. The production performance management method is for use in a production performance management device, which comprises a connection interface, a storage and a processor. The connection interface is configured to receive production data. The storage is configured to store the production data and a production performance management program. The processor is electrically connected to the connection interface and the storage. The production performance management method is executed by the processor and comprises the following steps of: running the production performance management program; defining a main objective, a plurality of measurement indices, a plurality of factors, a custom mapping function between the main objective and the measurement indices and a plurality of specific mapping functions between the measurement indices and the factors by the production performance management program; and using the custom mapping function and the specific mapping functions to decide a factor value of each of the factors from the production data by the production performance management program so as to make a main objective value of the main objective meet a main constraint.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

FIG. 1 is a schematic view of a production performance management device 1 of a first embodiment to a third embodiment of the present invention;
FIG. 2 depicts corresponding relations among main objectives, measurement indices and factors defined by a production performance management program of the first embodiment of the present invention;
FIG. 3 depicts corresponding relations among main objectives, sub-objectives, measurement indices and factors defined by a production performance management program of the second embodiment of the present invention;
FIG. 4 is a schematic view illustrating a graphical interface of the production performance management program of the present invention;
FIG. 5 is a flowchart diagram of a production performance management method of a fourth embodiment of the present invention; and
FIG. 6 is a flowchart diagram of a production performance management method of a fifth embodiment of the present invention.

### DESCRIPTION OF THE PREFERRED EMBODIMENT

In the following description, the present invention will be explained with reference to embodiments thereof. The present invention relates to a production performance management device and a production performance management method thereof. It shall be appreciated that, these embodiments are not intended to limit the present invention to any specific environment, applications or particular implementations described in these embodiments. Therefore, description of these embodiments is only for purpose of illustration rather than to limit the present invention, and the scope of this application shall be governed by the claims. Besides, in the following embodiments and the attached drawings, elements unrelated to the present invention are omitted from depiction; and dimensional relationships among individual elements in the attached drawings are illustrated only for ease of understanding, but not to limit the actual scale.

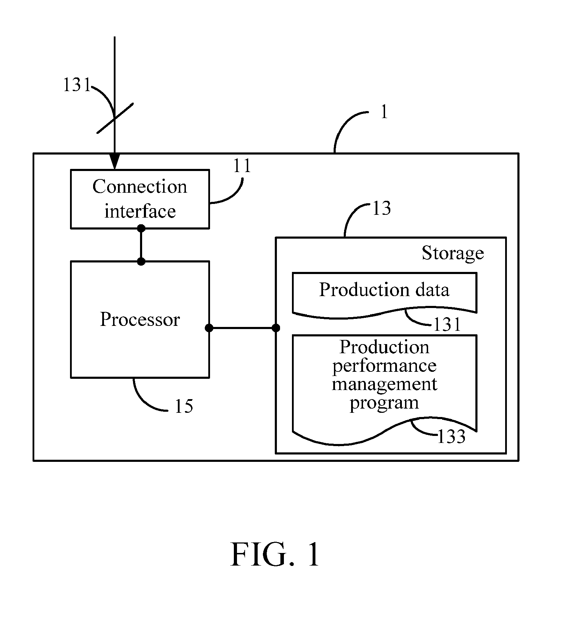

A first embodiment of the present invention is shown in FIG. 1, which is a schematic view of a production performance management device 1. The production performance management device 1 comprises a connection interface 11, a storage 13 and a processor 15. The processor 15 is electrically connected to the connection interface 11 and the storage 13. The connection interface 11 may be an input interface or a network interface, and is configured to receive production data 131. The processor 15 stores the received production data 131 into the storage 13. Additionally, the storage 13 further stores a production performance management program 133. The processor 15 executes the production performance management program 133 to decide related parameters of a manufacturing procedure based on the production data 131.

Specifically, the production data 131 are data related to a manufacturing procedure of a manufacturer, and may comprise (but is not limited to): an order, the product specification and the products to be manufactured of an order, and the products manufactured, equipment types, production materials, the equipment operation speed or the like data that can be set in the manufacturing procedure. The production performance management program 133 defines a main objective, a plurality of measurement indices, a plurality of factors, a custom mapping function between the main objective and the measurement indices and a plurality of specific mapping functions between the measurement indices and the factors.

The main objective is a production objective that the user desires the manufacturing procedure to achieve. For example, the main objective may be one of an equipment performance, an operational cost, a production capacity reserve amount, a scheduling stability and an on-time delivery rate. The measurement indices are related conditions to be considered in order to achieve the main objective. For example, the measurement indices may be selected from a group consisting of a halt-for-material-preparation time, an actual production time, a theoretical production time, an effective product production time, a personnel expenses, a material cost, a depreciation cost, a maintenance expense and a utility fee.

The factors are related parameters of the manufacturing procedure, and are selected from the production data 131. For example, the factors may be selected from a group consisting of a product specification, products to be manufactured, products manufactured, an equipment type, a material type and an equipment operation speed. Additionally, the factors may further be divided into uncontrollable factors (which include the product specification and the products to be manufactured) and controllable factors (which include the products manufactured, the equipment type, the material type and the equipment operation speed).

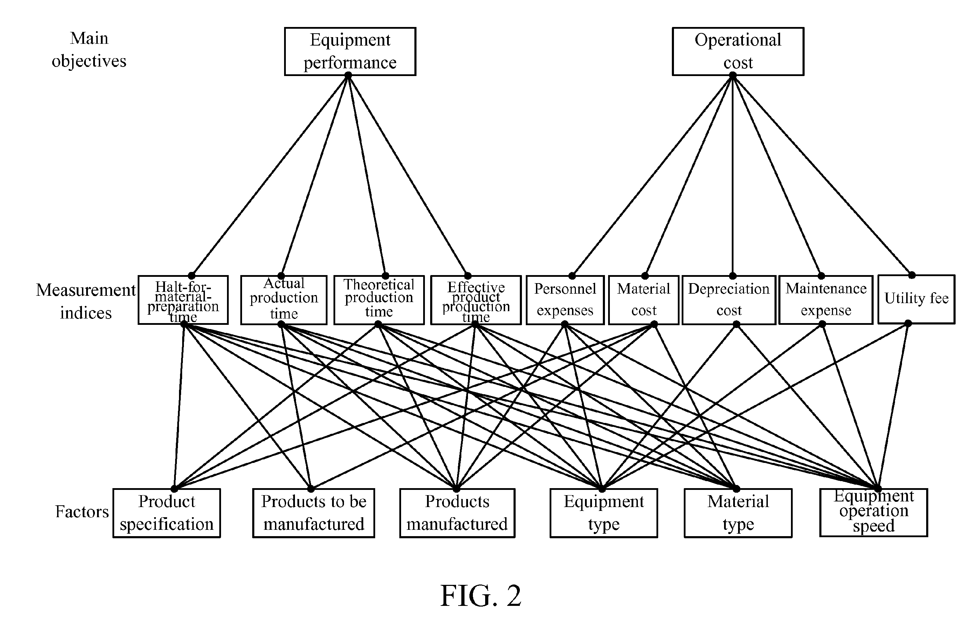

FIG. 2 represents corresponding relations between each of the main objectives and the measurement indices and corresponding relations between the measurement indices and the factors in the form of a tree. The custom mapping function is to define the corresponding relations between the main objectives and the measurement indices, and different main objectives may correspond to one or more different measurement indices. When measurement index values of the measurement indices are decided, a main objective value of the main objective may be obtained through the custom mapping function.

For example, when the main objective is an equipment performance, the measurement indices corresponding to the equipment performance include a halt-for-material-preparation time, an actual production time, a theoretical production time and an effective product production time. The custom mapping function for the equipment performance is: equipment performance value = (actual production time value/(halt-for-material-preparation time value + actual production time value) + theoretical production time value/actual production time value + effective product production time value/actual production time value)/3. As another example, when the main objective is an operational cost, the measurement indices corresponding to the operational cost include a personnel expenses, a material cost, a depreciation cost, a maintenance expense and a utility fee. The custom mapping function for the operational cost is: operational cost value = personnel expenses value + material cost value + depreciation cost value + maintenance expense value + utility fee value.

Similarly, the specific mapping function defines the corresponding relations between the measurement indices and the factors, and different measurement indices may correspond to one or more different factors. When factor values of the factors are decided, measurement index values of the measurement indices may be obtained through the specific mapping function. For example, when the measurement index is a theoretical production time, the factors corresponding to the theoretical production time include a product specification, products manufactured, an equipment type, a material type and an equipment operation speed.

Accordingly, the specific mapping function for the theoretical production time may be: theoretical production time value = products manufactured value*(system constant-a*X1-b*X2-c*X3+d*X4+e*MTL). In this specific function, the system constant is related to the overall factors; parameters a, b, c, d and e are related to the equipment type and the equipment operation speed; parameters X1, X2, X3 and X4 are related to the product specification, and represent a product length, a product area, a length of a product base, and a product thickness respectively; and the parameter MTL is related to the material type.

Through defining the aforesaid main objectives, the measurement indices, the factors, the custom mapping function between the main objective and the measurement indices and specific mapping functions between the measurement indices and the factors, the production performance management program 133 can use the custom mapping function and the specific mapping functions to decide a factor value of each of the factors from the production data 131 so as to make the main objective value of the main objective meet a main constraint. For example, the main constraint for the equipment performance value is 80%.

It should be appreciated that, in the present invention, there may be one or more main objectives. When there is one main objective, the production performance management program 133 decides a factor value of each of the factors from the production data 131 according to only the measurement indices, the custom mapping function and the specific mapping functions that are related to this main objective. However, when there is a plurality of main objectives, for example, two main objectives, the production performance management program is further configured to define an additional main objective and an additional custom mapping function between the additional main objective and the measurement indices. Then, the production performance management program may use the custom mapping function, the additional custom mapping function and the specific mapping functions to decide the factor value of each of the factors from the production data 131 so as to make the main objective value of the main objective meet the main constraint and an additional main objective value of the additional main objective meet an additional main constraint.

For example, when the main objective is an equipment performance and the additional main objective is an operational cost, the production performance management program 133 decides the factor value of each of the factors from the production data 131 according to the measurement indices and the custom mapping function that are related to the equipment performance as well as the measurement indices, the additional custom mapping function and the specific mapping functions that are related to the operational cost. In other examples, the main objective may be set to be one of an equipment performance, an operational cost, a production capacity reserve amount, a scheduling stability and an on-time delivery rate, and the additional main objective may be another of an equipment performance, an operational cost, a production capacity reserve amount, a scheduling stability and an on-time delivery rate. Additionally, the main objectives may have the same priority level or have different priority levels. When the main objectives have different priority levels, the production performance management program 133, when deciding the factor values, must firstly meet the main objective with a higher priority level and then meet the main objectives with lower priority levels.

Specifically, because the custom mapping function between the main objective and the measurement indices may be created based on the common sense well known in the art, it can be preset and defined by the production performance management program 133 directly, or be self-defined and changed by the user. However, each of the specific mapping functions between the measurement indices and the factors of the present invention is created through a series of statistical analysis methods based on the received production data 131. For example, each of the specific mapping functions may be created through a three-stage procedure described hereinafter.

Firstly at a first stage, for each of the measurement indices, related factors are retrieved and selected from the factors preliminarily through the use of the correlation power transformation, the box-cox transformation or the principal component analysis. Then at a second stage, for each of the measurement indices, a determination of whether there is an exception is further made on the retrieved and selected factors through the use of the standard deviation, the interquartile range (IQR), the jackknifing, the leverage, the difference between the fitted values, the Hampel identifier or the Cook's distance based on the related factors retrieved and selected at the first stage so as to avoid any special specifications or outliers from influencing the creation of the specific mapping function.

Finally at a third stage, for each of the measurement indices, the Stepwise regression is used to find out a linear relation between the factors and the measurement indices based on the factors decided at the second stage so as to create a specific mapping function. The Stepwise regression may be accomplished by selecting a plurality of criterions, e.g., the Akaike information criterion (AIC), the Bayesian information criterion (BIC), the Schwartz information criterion (SIC) or the like criterions; or by calculating an F-statistic of each of the factors and setting a threshold thereof repeatedly to remove the least important factor, and inspecting whether the factors that are not retrieved and selected previously are favorable for the integrity of the specific mapping function until the set criterions are achieved or the optimal situation is achieved within a certain time.

It should be appreciated that, the detailed process of creating the specific mapping function or adopting other statistical analysis methods to create the specific mapping function will be appreciated by those of ordinary skill in the art based on the procedure of creating the specific mapping function illustrated in the aforesaid example, so it will not be further described herein. Additionally, the aforesaid "meeting" the main constraint means that the decided factor values may make the calculated main objective closest to or greater than or equal to the main constraint.

For a second embodiment of the present invention, please also refer to FIG. 1 and FIG. 2. Differing from the first embodiment, the production performance management program 133 in this embodiment further defines a time interval so as to decide related parameters of the manufacturing procedure within the time interval. Specifically, for a single main objective, the production performance management program 133 selects a plurality of factor value sets of the factors from the production data 131 according to an optimization algorithm (e.g., the genetic algorithm), and uses the custom mapping function and the specific mapping functions to select an optimized factor value set from the factor value sets according to a loop-based optimization procedure within the time interval so as to decide the factor value of each of the factors.

Specifically, the production performance management program 133 selects a plurality of factor value sets from the production data 131 according to an optimization algorithm (e.g., the genetic algorithm). Next, within the time interval, the production performance management program 133 uses the custom mapping function and the specific mapping functions to calculate the corresponding main objective value based on the factor value of each of factor value sets in sequence through a loop-based optimization procedure. By calculating as many main objectives corresponding to the factor value sets as possible within the time interval (i.e., calculating the main objectives corresponding to each of the factor value sets one by one through the loop-based optimization procedure under a constraint of the calculating time), and comparing these calculated main objectives, an optimized factor value set can be selected by the production performance management program 133. It should be appreciated that, the time interval may be set by the system according to the production data 131 automatically or may be set by the user manually. The length of the time interval has an influence on whether the factor values decided finally are the most suitable for the current manufacturing procedure. In other words, the longer the time interval is, the more main objectives corresponding to the factor value sets can be calculated by the production performance management program 133 and, thus, the higher the probability of selecting the most suitable factor value set for the current manufacturing procedure will be.

On the other hand, in case of a plurality of main objectives (e.g., two main objectives, i.e., a main objective and an additional main objective), the production performance management program 133 also selects a plurality of factor value sets from the production data 131 according to an optimization algorithm (e.g., the genetic algorithm), and uses the custom mapping function, the additional custom mapping function and the specific mapping functions to select an optimized factor value set from the factor value sets through a loop-based optimization procedure within a time interval so as to decide the factor value of each of the factors. In other words, in case of a plurality of main objectives, the factor value of the optimized factor value set selected by the production performance management program 133 may make the main objective value of the main objective meet the main constraint and the additional main objective value of the additional main objective meet the additional main constraint. Likewise, in this case, the main objectives may have the same priority level or may have different priority levels.

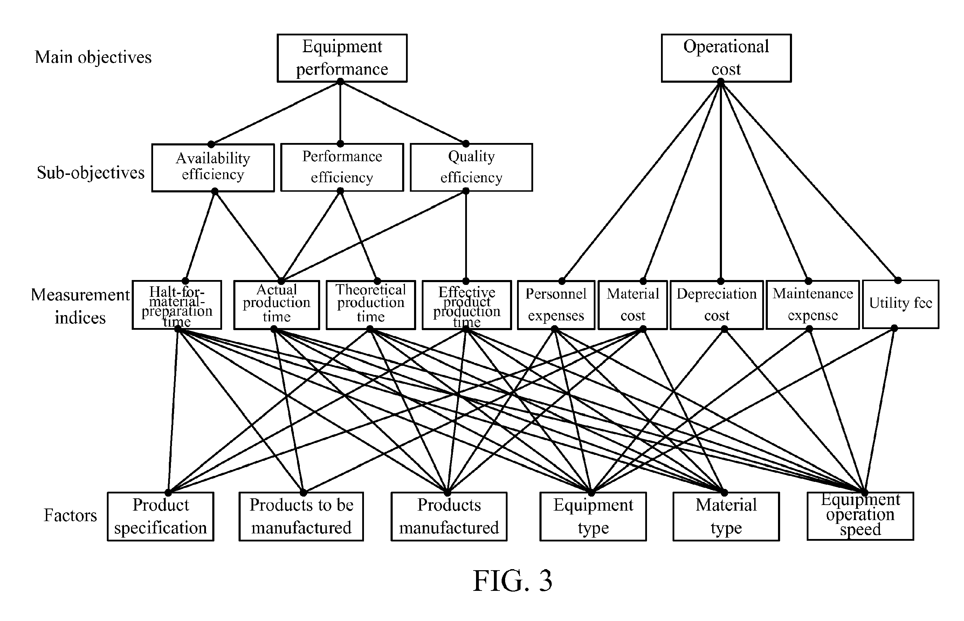

For a third embodiment of the present invention, please also refer to FIG. 1 and FIG. 3. In this embodiment, the production performance management program 133 further defines a plurality of sub-objectives. In this case, the custom mapping function is composed of a first custom mapping function between the main objective and the sub-objectives and a plurality of second custom mapping functions between the sub-objectives and the measurement indices. In other words, the custom mapping function may be further divided into a combination of the first custom mapping function and the second custom mapping functions. In this case, the factor value of each of the factors decided by the production performance management program 133 must make the sub-objective value of each of the sub-objectives meet the sub-constraint thereof, and further make the main objective value of the main objective meet the main constraint.

Taking a case where the main objective is an equipment performance, and the sub-objectives are an availability efficiency, a performance efficiency and a quality efficiency as an example, the first custom mapping function is: equipment performance value = (availability efficiency value + performance efficiency value + quality efficiency value)/3; and the second custom mapping functions respectively are: availability efficiency value = actual production time value/(halt-for-material-preparation time value + actual production time value), performance efficiency value = theoretical production time value/actual production time value, and quality efficiency value = effective product production time value/actual production time value.

Similarly, because the first custom mapping function between the main objective and the sub-objectives and the plurality of second custom mapping functions between the sub-objectives and the measurement indices may be created based on the common sense well known in the art, they may be set by the production performance management program 133 automatically or may be set or adjusted by the user manually. It should be appreciated that, in the present invention, it is not required that each of the main objectives has sub-objectives, and the user may change the setting of the production performance management program 133 running in the production performance management device 1 to open or close sub-objective options through operating the production performance management device 1.

In other embodiments, the connection interface 11 may connect to a server (not depicted) of the manufacturer. The server runs a computer integrated manufacturing (CIM) system to set related parameters (products manufactured, equipment type and material type) of a manufacturing procedure. The connection interface 11 receives the production data 131 from the server. After having decided the factor values, the production performance management program 133 further generates a factor planning result according to the factor values, and the processor 15 further enables the connection interface 11 to transmit the factor planning result to the server so that the CIM system sets the related parameters of the manufacturing procedure and executes the manufacturing procedure according to the factor planning result.

Additionally in other embodiments, the CIM system of the server may generate a manufacturing procedure result and transmits it back to the production performance management device 1 when the manufacturing procedure is being executed or has been completed. In this way, the production performance management program 133 can analyze whether the decided factor values and the obtained main objectives comply with the expectations according to the manufacturing procedure result, and further adjust the specific mapping functions between the measurement indices and the factors so as to minimize the differences between the predicted main objectives and the actual data of the manufacturing procedure.

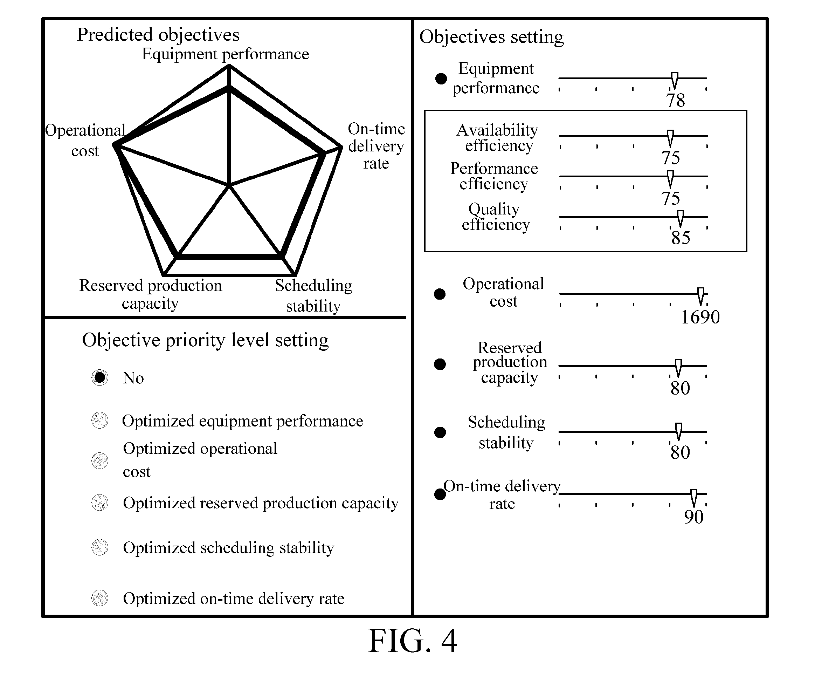

It should be appreciated that, the production performance management program 133 of the present invention may be modularized to comprise a production management module, a factor relation creation module and a user interface module. The production management module is configured to define main objectives, the measurement indices and the factors, and create a custom mapping function between each of the main objectives and the measurement indices. The factor relation creation module is configured to create the specific mapping functions between the measurement indices and the factors. The user interface module is configured to provide a graphical interface for the user to set each of the main objective values and each of the sub-objectives and to display related information of the production data 131, as shown in FIG. 4. In the graphical interface, the user may set each of the main objectives and select the priority levels of the main objectives. Additionally, the graphical interface further represents the predicted objectives in the form of a pentagonal distribution graph.

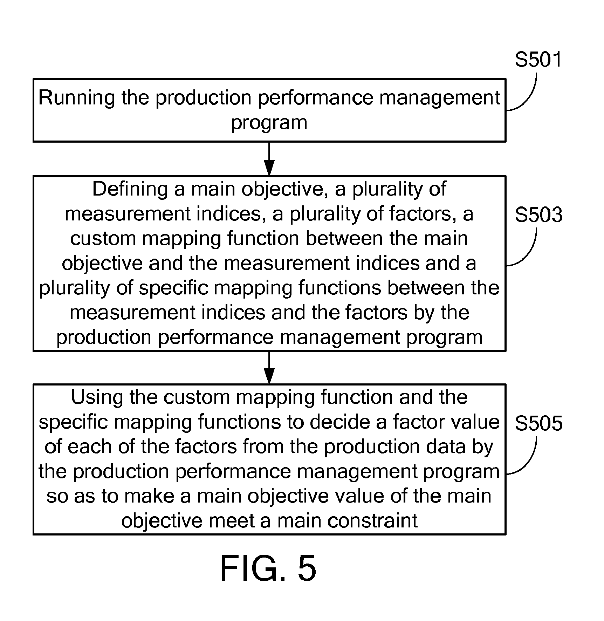

A fourth embodiment of the present invention is shown in FIG. 5, which is a flowchart diagram of a production performance management method. The production performance management method described in this embodiment may be used in a production performance management device, for example, the production performance management device 1 in the embodiments described above. The production performance management device comprises a connection interface, a storage and a processor. The connection interface receives production data. The storage stores the production data and a production performance management program. The processor is electrically connected to the connection interface and the storage, and executes the production performance management method.

Firstly, step S501 is executed to run the production performance management program. Then, step S503 is executed to define a main objective, a plurality of measurement indices, a plurality of factors, a custom mapping function between the main objective and the measurement indices and a plurality of specific mapping functions between the measurement indices and the factors by the production performance management program. Next, step S505 is executed to use the custom mapping function and the specific mapping functions to decide a factor value of each of the factors from the production data by the production performance management program so as to make a main objective value of the main objective meet a main constraint.

In other embodiments, when there is a plurality of main objectives, the production performance management program further defines other main objectives and defines a custom mapping function between each of the main objectives and the measurement indices. For example, when there are two main objectives, the step S503 further comprises the following step of: defining an additional main objective and an additional custom mapping function between the additional main objective and the measurement indices by the production performance management program; and the step S505 further comprises the following step of: using the custom mapping function, the additional custom mapping function and the specific mapping functions to decide the factor value of each of the factors from the production data by the production performance management program so as to make the main objective value of the main objective meet the main constraint and an additional main objective value of the additional main objective meet an additional main constraint.

Additionally, in other embodiments, the production performance management method may further comprises the following step of: defining a plurality of sub-objectives, a first custom mapping function between the main objective and the sub-objectives and a plurality of second custom mapping functions between the sub-objectives and the measurement indices by the production performance management program. In this case, the custom mapping function is composed of the first custom mapping function and the second custom mapping functions.

In other embodiments, the connection interface of the production performance management device may connect to a server. The server runs a computer integrated manufacturing (CIM) system, and the connection interface receives the production data from the server. In this case, the production performance management method of the present invention may further comprise the following steps of: generating a factor planning result according to the factor values by the production performance management program; and enabling the connection interface to transmit the factor planning result to the server by the processor so that the CIM system executes a manufacturing procedure according to the factor planning result.

In addition to the aforesaid steps, the production performance management method of this embodiment can also execute all the operations and have all the functions set forth in the aforesaid embodiments. How the production performance management method of this embodiment executes these operations and have these functions will be readily appreciated by those of ordinary skill in the art based on the explanation of the aforesaid embodiments, and thus will not be further described herein.

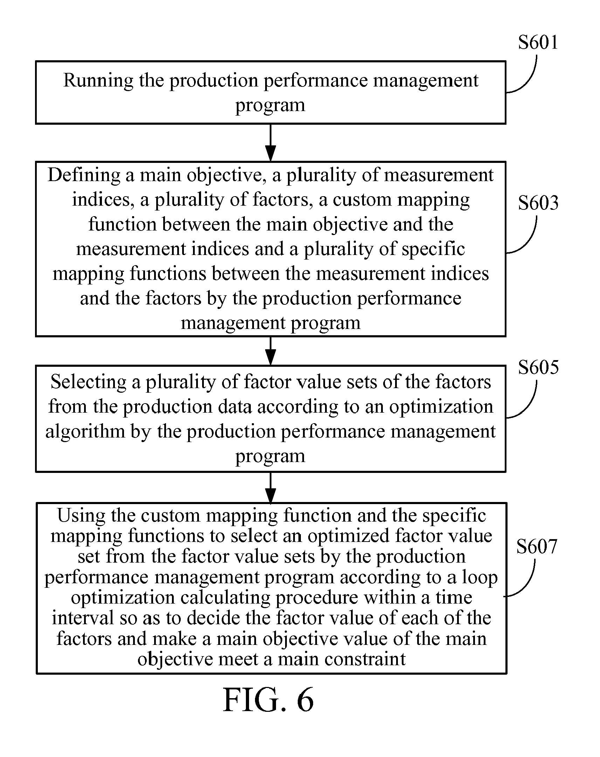

A fifth embodiment of the present invention is shown in FIG. 6, which is a flowchart diagram of a production performance management method. The production performance management method described in this embodiment may be used in a production performance management device, for example, the production performance management device 1 in the embodiments described above. The production performance management device comprises a connection interface, a storage and a processor. The connection interface receives production data. The storage stores the production data and a production performance management program. The processor is electrically connected to the connection interface and the storage, and executes the production performance management method.

Firstly, step S601 is executed to run the production performance management program. Then, step S603 is executed to define a main objective, a plurality of measurement indices, a plurality of factors, a custom mapping function between the main objective and the measurement indices and a plurality of specific mapping functions between the measurement indices and the factors by the production performance management program. Next, step S605 is executed to select a plurality of factor value sets of the factors from the production data according to an optimization algorithm by the production performance management program. Afterwards, step S607 is executed to use the custom mapping function and the specific mapping functions to select an optimized factor value set by the production performance management program from the factor value sets according to a loop-based optimization procedure within a time interval so as to decide the factor value of each of the factors and make a main objective value of the main objective meet a main constraint.

In other embodiments, when there is a plurality of main objectives, the production performance management program further defines other main objectives, and defines the custom mapping functions between the main objectives and the measurement indices. For example, when there are two main objectives, the step S603 further comprises the following step of: defining an additional main objective and an additional custom mapping function between the additional main objective and the measurement indices by the production performance management program; the step S605 further comprises the following step of: selecting a plurality of factor value sets of the factors from the production data according to an optimization algorithm by the production performance management program; and the step S607 further comprises the following step of: using the custom mapping function and the specific mapping functions to select an optimized factor value set from the factor value sets by the production performance management program according to a loop-based optimization procedure within a time interval so as to decide the factor value of each of the factors and to make the main objective value of the main objective meet the main constraint and an additional main objective value of the additional main objective meet an additional main constraint.

Additionally, in other embodiments, the production performance management method of the present invention may further comprises the following step of: defining a plurality of sub-objectives, a first custom mapping function between the main objective and the sub-objectives and a plurality of second custom mapping functions between the sub-objectives and the measurement indices by the production performance management program. In this case, the custom mapping function is composed of the first custom mapping function and the second custom mapping functions.

In other embodiments, the connection interface of the production performance management device may connect to a server. The server runs a computer integrated manufacturing (CIM) system, and the connection interface receives the production data from the server. In this case, the production performance management method of the present invention may further comprise the following steps of: generating a factor planning result according to the factor values by the production performance management program; and enabling the connection interface to transmit the factor planning result to the server by the processor so that the CIM system executes a manufacturing procedure according to the factor planning result.

In addition to the aforesaid steps, the production performance management method of this embodiment can also execute all the operations and have all the functions set forth in the aforesaid embodiments. How the production performance management method of this embodiment executes these operations and have these functions will be readily appreciated by those of ordinary skill in the art based on the explanation of the aforesaid embodiments, and thus will not be further described herein.

The production performance management methods described in the fourth embodiment and the fifth embodiment may each be implemented by a computer program product comprising a plurality of codes. Each of the computer program products may be a file that can be transmitted in the network, or may be stored in a tangible machine-readable storage medium. For each of the computer program products, when the codes composed in the computer program product is loaded into an electronic device (e.g., the production performance management device 1 described in the first embodiment to the third embodiment), the production performance management method described in the corresponding one of the fourth embodiment and the fifth embodiment is executed. The tangible machine-readable storage medium may be an electronic product, such as a read only memory (ROM), a flash memory, a floppy disk, a hard disk, a compact disk (CD), a mobile disk, a magnetic tape, a database accessible to networks, or any other storage media with the same function and well known to those skilled in the art.

According to the above descriptions, the production performance management mechanism of the present invention can define a main objective, a plurality of measurement indices, a plurality of factors, a custom mapping function between the main objective and the measurement indices and a plurality of specific mapping functions between the measurement indices and the factors, and decide a factor value of each of the factors from the production data so as to make a main objective value of the main objective meet a main constraint. Thereby, the production performance management mechanism of the present invention can decide related parameters of a manufacturing procedure from the production data so as to meet one or more production objectives. Furthermore, by use of results of the manufacturing procedure fed back by the manufacturer, the production parameters can be further adjusted by the production performance management mechanism of the present invention so that the manufacturing procedure can be optimized through repeated adjustment.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A production performance management device, comprising:
a connection interface, being configured to receive production data;
a storage, being configured to store the production data and a production performance management program; and
a processor electrically connected to the connection interface and the storage, being configured to run the production performance management program, wherein the production performance management program defines a main objective, a plurality of measurement indices, a plurality of factors, a custom mapping function between the main objective and the measurement indices and a plurality of specific mapping functions between the measurement indices and the factors, and uses the custom mapping function and the specific mapping functions to decide a factor value of each of the factors from the production data so as to make a main objective value of the main objective meet a main constraint.

2. The production performance management device of claim 1, wherein the production performance management program is further configured to select a plurality of factor value sets of the factors from the production data according to an optimization algorithm, and uses the custom mapping function and the specific mapping functions to select an optimized factor value set from the factor value sets according to a loop-based optimization procedure within a time interval so as to decide the factor value of each of the factors.

3. The production performance management device of claim 1, wherein the production performance management program is further configured to define an additional main objective and an additional custom mapping function between the additional main objective and the measurement indices, and the production performance management program is further configured to use the custom mapping function, the additional custom mapping function and the specific mapping functions to decide the factor value of each of the factors from the production data so as to make the main objective value of the main objective meet the main constraint and an additional main objective value of the additional main objective meet an additional main constraint.

4. The production performance management device of claim 3, wherein the production performance management program is further configured to select a plurality of factor value sets of the factors from the production data according to an optimization algorithm, and use the custom mapping function, the additional custom mapping function and the specific mapping functions to select an optimized factor value set from the factor value sets according to a loop-based optimization procedure within a time interval so as to decide the factor value of each of the factors.

5. The production performance management device of claim 3, wherein the main objective is an equipment performance, and the additional main objective is one of an operational cost, a production capacity reserve amount, a scheduling stability and an on-time delivery rate.

6. The production performance management device of any of claims 1 to 5, wherein the measurement indices are selected from a group consisting of a halt-for-material-preparation time, an actual production time, a theoretical production time, an effective product production time, personnel expenses, a material cost, a depreciation cost, an maintenance expense and a utility fee, and the factors are selected from a group consisting of a product specification, products to be manufactured, products manufactured, an equipment type, a material type and an equipment operation speed.

7. The production performance management device of any of claims 1 to 6, wherein the main objective is one of an equipment performance, an operational cost, a production capacity reserve amount, a scheduling stability and an on-time delivery rate.

8. The production performance management device of any of claims 1 to 7, wherein the production performance management program is further configured to define a plurality of sub-objectives, a first custom mapping function between the main objective and the sub-objectives and a plurality of second custom mapping functions between the sub-objectives and the measurement indices, and the custom mapping function is composed of the first custom mapping function and the second custom mapping functions.

9. The production performance management device of claim 8, wherein the main objective is an equipment performance, and each of the sub-objectives is one of an availability efficiency, a performance efficiency and a quality efficiency.

10. The production performance management device of any of claims 1 to 9, wherein the connection interface connects to a server, the server runs a computer integrated manufacturing (CIM) system, the connection interface receives the production data from the server, the production performance management program further generates a factor planning result according to the factor values, and the processor further enables the connection interface to transmit the factor planning result to the server so that the CIM system executes a manufacturing procedure according to the factor planning result.

11. A production performance management method for use in a production performance management device, the production performance management device comprises a connection interface, a storage and a processor, the connection interface being configured to receive production data, the storage being configured to store the production data and a production performance management program, the processor being electrically connected to the connection interface and the storage, and the production performance management method being executed by the processor and comprising the following steps of:
running the production performance management program;
defining a main objective, a plurality of measurement indices, a plurality of factors, a custom mapping function between the main objective and the measurement indices and a plurality of specific mapping functions between the measurement indices and the factors by the production performance management program; and
using the custom mapping function and the specific mapping functions to decide a factor value of each of the factors from the production data by the production performance management program so as to make a main objective value of the main objective meet a main constraint.

12. The production performance management method of claim 11, further comprising the following steps of:
selecting a plurality of factor value sets of the factors from the production data according to an optimization algorithm by the production performance management program; and
using the custom mapping function and the specific mapping functions to select an optimized factor value set from the factor value sets by the production performance management program according to a loop-based optimization procedure within a time interval so as to decide the factor value of each of the factors.

13. The production performance management method of claim 11, further comprising the following steps of:
defining an additional main objective and an additional custom mapping function between the additional main objective and the measurement indices by the production performance management program; and
using the custom mapping function, the additional custom mapping function and the specific mapping functions to decide the factor value of each of the factors from the production data by the production performance management program so as to make the main objective value of the main objective meet the main constraint and an additional main objective value of the additional main objective meet an additional main constraint.

14. The production performance management method of claim 13, further comprising the following steps of:
selecting a plurality of factor value sets of the factors from the production data by the production performance management program according to an optimization algorithm; and
using the custom mapping function, the additional custom mapping function and the specific mapping functions to select an optimized factor value set from the factor value sets by the production performance management program according to a loop-based optimization procedure within a time interval so as to decide the factor value of each of the factors.

15. The production performance management method of claim 13, wherein the main objective is an equipment performance, and the additional main objective is one of an operational cost, a production capacity reserve amount, a scheduling stability and an on-time delivery rate.

16. The production performance management method of any of claims 11 to 15, wherein the measurement indices are selected from a group consisting of a halt-for-material-preparation time, an actual production time, a theoretical production time, an effective product production time, personnel expenses, a material cost, a depreciation cost, an maintenance expense and a utility fee, and the factors are selected from a group consisting of a product specification, products to be manufactured, products manufactured, an equipment type, a material type and an equipment operation speed.

17. The production performance management method of any of claims 11 to 16, wherein the main objective is one of an equipment performance, an operational cost, a production capacity reserve amount, a scheduling stability and an on-time delivery rate.

18. The production performance management method of any of claims 11 to 17, further comprising the following step of:
defining a plurality of sub-objectives, a first custom mapping function between the main objective and the sub-objectives and a plurality of second custom mapping functions between the sub-objectives and the measurement indices by the production performance management program, wherein the custom mapping function is composed of the first custom mapping function and the second custom mapping functions.

19. The production performance management method of claim 18, wherein the main objective is an equipment performance, and each of the sub-objectives comprises an availability efficiency, a performance efficiency and a quality efficiency.

20. The production performance management method of any of claims 11 to 19, wherein the connection interface connects to a server, the server runs a computer integrated manufacturing (CIM) system, and the connection interface receives the production data from the server, the production performance management method further comprising the following steps of:
generating a factor planning result according to the factor values by the production performance management program; and
enabling the connection interface to transmit the factor planning result to the server by the processor so that the CIM system executes a manufacturing procedure according to the factor planning result.
